(19) Europäisches Patentamt

European Patent Office

Office européen des brevets

(11) Veröffentlichungsnummer: **0 295 403 B1**

(12) **EUROPÄISCHE PATENTSCHRIFT**

(45) Veröffentlichungstag der Patentschrift: **23.06.93**

(51) Int. Cl.5: **C08G 63/49**, C09D 135/02

(21) Anmeldenummer: **88106879.5**

(22) Anmeldetag: **29.04.88**

Die Akte enthält technische Angaben, die nach dem Eingang der Anmeldung eingereicht wurden und die nicht in dieser Patentschrift enthalten sind.

(54) **Verwendung von wasserlöslichen Alkydharzen als Bindemittel in wasserverdünnbaren Streichlacken.**

(30) Priorität: **17.06.87 AT 1541/87**

(43) Veröffentlichungstag der Anmeldung:
**21.12.88 Patentblatt 88/51**

(45) Bekanntmachung des Hinweises auf die Patenterteilung:
**23.06.93 Patentblatt 93/25**

(84) Benannte Vertragsstaaten:
**BE CH DE ES FR GB IT LI NL SE**

(56) Entgegenhaltungen:
EP-A- 0 029 145     EP-A- 0 267 562
AT-A- 377 990       FR-A- 2 224 506
GB-A- 869 145       GB-A- 1 206 442
GB-A- 2 100 271

(73) Patentinhaber: **VIANOVA KUNSTHARZ AKTIEN-GESELLSCHAFT**
**Postfach 191 Leechgasse 21**
**A-8011 Graz(AT)**

(72) Erfinder: **Zückert, Bertram, Dr. Chem.**
**Krottendorfstrasse 90**
**A-8052 Graz(AT)**
Erfinder: **Awad, Rami-Raimund, Dipl.-Ing. Chem.**
**Papiermühlgasse 28**
**A-8020 Graz(AT)**
Erfinder: **Weger, Walter, Dr. Chem.**
**Leechgasse 82**
**A-8010 Graz(AT)**

# EP 0 295 403 B1

## Beschreibung

Die Erfindung betrifft die Verwendung von wasserlöslichen Alkydharzen, die durch Neutralisation ihrer von Methacrylsäuregruppen stammenden Carboxylgruppen in die wasserlösliche Form übergeführt werden, als Bindemittel zur Formulierung von wasserverdünnbaren Steichlacken.

Aus den AT-PSen 365 215, 369 773, 374 207, 369 774 und 377 990 sind Verfahren zur Herstellung von wäßrigen Alkydharzemulsionen bekannt, wobei die Einführung der zur Stabilisierung der Emulsion notwendigen Carboxylgruppen durch Pfropfcopolymerisation von Methacrylsäure sowie von weiteren Vinyl- und Acrylmonomeren an einen Teil der zur Alkydharzbildung eingesetzten ungesättigten Ölfettsäuren erfolgt. Alle diese Produkte enthalten Polyethylenglykole oder Polyethylenglykol enthaltende Vorprodukte als essentielle Bestandteile, wobei in allen Fällen versucht wird, das Polyethylenglykol nicht über die im wäßrigen Milieu verseifbare Esterbindung, sondern über Zwischenprodukte einzubauen. Diese Produkte werden für sich oder in Kombination mit urethanmodifzierten Alkydharzen verarbeitet. Diese Produkte erlauben die Herstellung von lufttrocknenden wasserverdünnbaren Lacken, die sich durch gute Verarbeitbarkeit und eine ausgezeichnete Lagerstabilität auszeichnen.

In allen Fällen weisen die Produkte des oben zitierten Standes der Technik neben dem Polyethylenglykol als wesentlichen Bestandteil auch eine Säurezahl von maximal 35, bevorzugt von weniger als 25 mg KOH/g auf. Höhere Werte der Säurezahl führen bei diesen Produkten zu Lackfilmen mit ungenügender Wasserbeständigkeit.

Obwohl zur Neutralisation dieser Säuregruppen auch Alkalihydroxide oder Ammoniak herangezogen werden können, werden gut glänzende Lackierungen nur bei Verwendung von organischen Aminen erhalten.

Gemäß AT-PS 375 667 werden Emulgatorharze, die durch Pfropfpolymerisation von (Meth)acrylsäure und anderen Monomeren auf PEG-modifizierte Fettsäure-Polyol-Ester hergestellt werden, in Kombination mit urethanmodifizierten Alkydharzen zu wäßrigen Emulsionen verarbeitet. Emulsionen dieser Art sind besonders für Holzlacke geeignet, zeigen jedoch bei der Alterung starke Gilbungserscheinungen. Gemäß der DE-OS 24 16 658 werden durch Reaktion von Acrylsäure oder Methacrylsäure mit polyungesättigten Fettsäuren bei 250 bis 300°C Addukte hergestellt, die anschließend nach den bekannten Verfahren durch Veresterung, vorzugsweise unter Verwendung von Polyglykolen, zu wasserverdünnbaren Alkydharzen umgesetzt werden. Die Produkte zeigen eine relativ schlechte Trocknung, da ein Großteil der Fettsäuren durch die Adduktbildung und durch die bei der notwendigen hohen Reaktionstemperatur auftretenden Dimerisierung für die Filmbildung verloren geht. Überdies wird durch diese Adduktbildung ohne Verwendung von Polyglykolen bei der späteren Alkydharzbildung die Pigmentbenetzung wesentlich verschlechert.

Polyethylenglykolfreie Alkydharze mit einer im wesentlichen auf Methacrylsäureeinheiten beruhenden Säurezahl von 35 bis 70 mg KOH/g, die als "Emulgatorharze" bei der Emulsionspolymerisation von Vinyl- und/oder (Meth)acrylmonomeren eingesetzt werden, sind in der EP-B-267 562 beschrieben. In diesem Fall werden die Methacrylsäureeinheiten als Pfropfcopolymere in das Alkydharz eingebaut. Aus diesen Emulsionen lassen sich ausgezeichnete lufttrocknende Lacke auf Wasserbasis formulieren, die vielen Anforderungen der Praxis bereits weitgehend entsprechen.

Bei der Verwendung aller Produkte dieses Standes der Technik hat sich jedoch ein Nachteil ergeben, welcher den allgemeinen Einsatz von wäßrigen Streichlacken bisher entgegensteht. Es handelt sich dabei um die sogenannte "Anschlußzeit", d. h. die Zeit, innerhalb der man unmittelbar aneinandergrenzende Flächen streichen kann, ohne daß es beim überstreichen der Grenzzone zu Verlaufstörungen oder zum "Hängenbleiben" des Pinsels kommt.

Diese Anschlußzeit beträgt bei guten Streichlacken auf Lösemittelbasis bis zu 60 Minuten, bei Dispersionslakken dagegen oft nur 2 bis 3 Minuten. Die in dieser Beziehung besten Alkyd-Copolymeremulsionen, wie sie in der EP-B-267 562 beschrieben sind, zeigen Anschlußzeiten von max. 10 Minuten, was immer noch dazu führt, daß größere Flächen, wie Türen etc. von weniger geübten Personen nur mit Schwierigkeiten gestrichen werden können.

Überraschenderweise wurde nun gefunden, daß auf der Basis von nach teilweiser oder vollständiger Neutralisation der Carboxylgruppen wasserlöslichen Alkydharzen, deren Carboxylgruppen weitgehend von Pfropfcopolymerisaten aus ungesättigten Fettsäuren mit Mischungen aus Methacrylsäure und Acryl-Methacryl-Vinyl-Monomeren, welche keine weitere Funktionsgruppe tragen und bevorzugt benzinlösliche Homopolymere bilden, stammen, lufttrocknende Streichlacke formuliert werden können, die auch im Hinblick auf die sogenannte Anschlußzeit den Praxisbedingungen entsprechen.

Die Erfindung betrifft demgemäß die Verwendung von nach teilweiser oder vollständiger Neutralisation wasserlöslichen Alkydharzen, welche 33 bis 43 Gew.-%eines Fettsäure-Methacrylsäure-Copolymeren aus 30 bis 50 Gew.-% ungesättigten Fettsäuren, 10 bis 25 Gew.-% Methacrylsäure und 30 bis 55 Gew.-%

2

anderer Vinyl- und/oder (Meth)acrylmonomeren, einen zusätzlichen Anteil an ungesättigten Fettsäuren, 10 bis 25 Gew.-% an Polyalkoholen mit 2 bis 6 Hydroxylgruppen, 10 bis 20 Gew.-% an aromatischen und/oder aliphatischen Dicarbonsäuren, 0 bis 15 Gew.-% an cyclischen und/oder polycyclischen Monocarbonsäuren und 0 bis 5 Gew.-% eines Polyethylenglykols enthalten, mit der Maßgabe, daß der Gesamtgehalt an ungesättigten Fettsäuren im Alkydharz 30 bis 70 Gew.-%, vorzugsweise 40 bis 60 Gew.-%, beträgt, daß die freien, einer Säurezahl von 25 bis 70 mg KOH/g entsprechenden Carboxylgruppen zu mindestens 80 % von Methacrylsäureeinheiten stammen, daß die zusammen mit der Methacrylsäure eingesetzten Monomeren neben der C-C-Doppelbindung keine weiteren funktionellen Gruppen tragen und zu mindestens 80 Gew.-% aus solchen bestehen, welche benzinlösliche Homopolymere bilden, und daß die Alkydharze eine Grenzviskositätszahl zwischen 7 und 16 ml/g (CHCl$_3$, 20°C) aufweisen, wobei die Summen der Prozentanteile beim Pfropfcopolymerisat und beim Alkydharz jeweils 100 ergeben müssen, als Bindemittel zur Formulierung von wasserverdünnbaren Streichlacken, welche die üblichen Pigmente, Füllstoffe, Hilfslösemittel und andere Lackhilfsmittel enthalten.

Die erfindungsgemäß erhaltenen Streichlacke weisen eine Anschlußzeit von 20 bis 40 Minuten auf und kommen auch in bezug auf die Streichbarkeit, d. h. die Leichtigkeit der Pinselführung, den Verlauf, den Glanz und die Fülle an entsprechende Alkydharzlacke auf Lösemittelbasis heran. Sie zeigen sich auch bezüglich der Lagerstabilität und der Trocknung, zwei für Streichlacke wesentliche Forderungen, gegenüber den bisher bekannten Alkydharzemulsionen mindestens ebenbürtig. überraschenderweise zeigen die Produkte auch ohne Mitverwendung von Polyethylenglykolen bei der Alkydharzformulierung gute Pigmentbenetzung und guten Glanz. Selbstverständlich ist die Verwendung dieser Komponente nicht ausgeschlossen. In speziellen Fällen kann dadurch die Lackformulierung, z. B. beim Einsatz "schwieriger" Pigmente erleichtert werden.

Ein weiterer Vorteil ergibt sich aus der Tatsache, daß -im Gegensatz zu den Produkten des Standes der Technikauch bei Verwendung von Ammoniak anstelle der ökologisch bedenklichen organischen Amine zur Salzbildung, die Produkte ihre gute Pigmentbenetzung und die Glanzeigenschaften beibehalten.

Die für die Formulierung der Streichlacke eingesetzten Alkydharze sind durch zumindest teilweise Salzbildung ihrer Carboxylgruppen mit Ammoniak, Alkalihydroxiden oder organischen Aminen wasserlöslich. Es sei darauf hingewiesen, daß diese Wasserlöslichkeit nicht unbedingt zu klaren Lösungen führen muß. Wie dem Fachmann bekannt, liegen in diesen Lösungen die Produkte als größere Harzmicellen vor, sodaß die Lösungen auch opakes oder sogar trübes Aussehen zeigen können.

Die Alkydharze haben als gemeinsames Merkmal einen Gehalt an freien Säuregruppen entsprechend einer Säurezahl von 25 bis 70 mg KOH/g, wobei diese Säuregruppen zu mindestens 80 % von Methacrylsäureeinheiten stammen, welche zusammen mit 30 bis 55 Gew.-%, bezogen auf das Gewicht des entstehenden Pfropfcopolymeren, von anderen Vinyl- und/oder (Meth)acrylmonomeren, die neben der C-C-Doppelbindung keine weiteren funktionellen Gruppen tragen, in einem gesonderten Reaktionsschritt auf einen Teil der eingesetzten ungesättigten Fettsäuren aufgepfropft wurden. Die Auswahl der neben der Methacrylsäure eingesetzten Monomeren erfolgt mit der Maßgabe, daß sie zu mindestens 80 Gew.-% aus solchen bestehen, welche benzinlösliche Homopolymere bilden. Im übrigen zeigen die Alkydharze den aus der Literatur bekannten Aufbau.

Der Gehalt dieser Harze an trocknenden und/oder halbtrocknenden Fettsäuren liegt zwischen 30 und 70 Gew.-%. Vorzugsweise liegt der Fettsäureanteil zwischen 40 und 60 Gew.-%. Von diesen Fettsäuren wird ein Anteil von 10 bis 40 Gew.-%, bezogen auf das Harzgewicht, in Form des Fettsäure-Methacrylsäure-Copolymeren eingebracht.

Die eingesetzten Alkydharze sind dadurch gekennzeichnet, daß sie einen Gehalt von 10 bis 25 Gew.-% an Polyalkoholen mit 2 bis 6 Hydroxylgruppen, 10 bis 20 Gew.-% an aromatischen und/oder aliphatischen Dicarbonsäuren, 0 bis 15 Gew.-% an cyclischen und/oder polycyclischen Monocarbonsäuren und 0 bis 5 Gew.-% eines Polyethylenglykols aufweisen. Die Produkte haben eine Grenzviskositätszahl zwischen 7 und 16 ml/g, gemessen in Chloroform bei 20°C.

Für die Herstellung der gepfropften Fettsäuren werden ungesättigte Fettsäuren mit einer Jodzahl über 135 (bevorzugt 160 - 200) und mit überwiegend isolierter Stellung der Doppelbindungen eingesetzt. Geeignet sind u. a. Leinolfettsäure, Safflorfettsäure sowie die Fettsäuren des Hanf-, Lallemantia-, Perilla- und Stillingiaöles, gegebenenfalls in Abmischung mit bis zu 25 Gew.-% an dehydratisierter Rizinusölfettsäure oder einer vergleichbaren, durch Isomerisierung hergestellten Conjuen-Fettsäure.

Die Fettsäure-Copolymerisate sind aus 30 bis 50 Gew.-% der obengenannten ungesättigten Fettsäuren, 10 bis 25 Gew.-% Methacrylsäure und 30 bis 55 Gew.-% anderer Monomeren, welche neben der C-C-Doppelbindung keine weiteren funktionellen Gruppen tragen, zusammengesetzt, wobei die Summe der Prozentanteile 100 ergeben muß. Als Monomere, welche neben der Methacrylsäure eingesetzt werden, dienen vorzugsweise (Meth)acrylverbindungen und aromatische Vinylverbindungen, insbesonders solche, die benzinlösliche Homopolymere bilden.

Geeignet sind u. a. Ester der Methacrylsäure und Acrylsäure mit n-Butanol, Isobutanol, tert.-Butanol oder 2-Ethylhexanol. Zum Einstellen des optimalen Tg-Bereiches des Copolymeren bzw. der daraus resultierenden Filmhärte wird Vinyltoluol verwendet. In kleinen Anteilen (bis zu 20 %) können auch Monomere, welche benzinunlösliche Polymere bilden, wie Methylmethacrylat oder Styrol, mitverwendet werden.

Die Pfropfcopolymerisation wird so durchgeführt, daß die Hauptmenge der Fettsäure, gegebenenfalls in Gegenwart geringer Anteile inerter Lösemittel, auf 110 - 150°C erhitzt wird und die Mischung der Monomeren mit einem geeigneten Initiator und der restlichen Fettsäure im Verlauf von einigen Stunden zudosiert wird. Die Reaktionsmischung wird anschließend so lange weiter auf Reaktionstemperatur gehalten, bis eine Rückstandsbestimmung einen Polymerisationsumsatz über 95 % ergibt. Als Initiatoren kommen u. a. Di-tert.-Butylperoxid, tert.-Butylperbenzoat und Cumolhydroperoxid in Betracht.

Die so hergestellten Fettsäure-Methacrylsäure-Pfropfcopolymerisate werden zusammen mit weiteren Fettsäuren zu den wasserlöslichen Alkydharzen verarbeitet. Als Fettsäuren können in dieser Stufe pflanzliche und tierische Fettsäuren mit einer Jodzahl über 120 eingesetzt werden, wobei bevorzugt ein Teil der Doppelbindungen in konjugierter Stellung vorliegen soll. Geeignet sind u. a. Soja-, Leinöl-, Safflloröl-, Tallöl- sowie Rizinenfettsäure.

Als Polyole und Dicarbonsäuren kommen für die Herstellung der Alkydharze alle Produkte in Betracht, welche auch zur Herstellung konventioneller Alkydharze eingesetzt werden. Bevorzugt werden Trimethylolethan, Trimethylolpropan, Pentaerythrit und Sorbit als Polyole und Ortho- oder Isophthalsäure sowie Adipinsäure als Dicarbonsäuren eingesetzt. Zur Regulierung der Filmhärte können ferner cyclische oder polycylische Monocarbonsäuren, wie Harzsäuren oder Benzoesäure, verwendet werden. Gegebenenfalls können auch Anteile von bis zu 5 Gew.-% von Polyethylenglykolen mit einem Molgewicht von 1000 bis 3000 eingebaut werden.

Die Veresterung kann durch gemeinsames Erhitzen aller Komponenten erfolgen. Bei Verwendung hochschmelzender Rohstoffe, wie Pentaerythrit und Isophthalsäure, ist es jedoch ratsam, zunächst Fettsäuren, Polyole und Dicarbonsäuren bis zum Erreichen einer klaren Schmelze allein zu verestern und erst dann das Fettsäure-Methacrylsäure-Copolymerisat zuzusetzen. Die Veresterung wird dann so weit getrieben, daß der Endwert der Säurezahl etwa 90 % der Konzentration der Carboxylgruppen der Methacrylsäure entspricht. Da diese Säuregruppen in den Copolymerketten tertiäre Stellung aufweisen und somit sterisch behindert sind, kann angenommen werden, daß sie wesentlich langsamer als die anderen Carboxylgruppen verestern und nach Beendigung der Reaktion den Hauptanteil der freien Säuregruppen liefern, welche die Wasserlöslichkeit des Harzes bewirken.

Da diese Säuregruppen durch $C=C$-Bindungen mit den Alkenylketten der Fettsäuren verbunden sind und die bevorzugten Pfropfstellen der isoliert ungesättigten pflanzlichen Fettsäuren sich an den aktivierten $CH_2$-Gruppen des $C_{11}$ und $C_{14}$ befinden, liegt zwischen den Säuregruppen und der nächsten Esterbindung ein langes hydrophobes Molekülsegment, welches den Angriff des Wassers abblockt. Die erfindungsgemäßen Alkydharz-Komponenten sind daher den bisher bekannten wasserverdünnbaren Alkydharzen auf Basis von Partialestern der o-Phthalsäure, Isophthalsäure oder Trimellithsäure in der Hydrolysefestigkeit weit überlegen.

Als organische, wasserverträgliche Co-Lösemittel sind vor allem die Methyl-, Ethyl- und Butyl-Ether des Ethylenglykols, Diethylenglykols, 1,2-Propylenglykols und Dipropylenglykols geeignet. Anteilweise können auch nur begrenzt wasserverträgliche Lösemittel wie n- und iso-Butanol verwendet werden. Der Gesamtgehalt an organischen Lösemitteln im fertigen Lack soll möglichst niedrig gehalten werden.

Zur Neutralisation der Säuregruppen sind neben dem bevorzugten Ammoniak u. a. Triethylamin, Dimethylethanolamin, KOH, NaOH und LiOH geeignet.

Die Alkydharze können entweder in neutralisierter oder nichtneutralisierter Form in einer Lösung in wasserverträglichen Lösemitteln zum Einsatz kommen. Bevorzugt werden Produkte jedoch in Form wäßriger Emulsionen angewendet, weil dadurch der Gehalt an organischen Lösungsmitteln wesentlich reduziert werden kann.

Die erfindungsgemäß erhaltenen wasserverdünnbaren Streichlacke werden in der üblichen Weise hergestellt. Ihre Anwendung kann sowohl als Klarlack, z. B. als wasserverdünnbare Holzlasur, oder in pigmentierter Form als Grundierung für Holz- oder Metalloberflächen oder als sogenannter Malerlack oder als do-it-yourself-Farbe erfolgen. Die zur Verwendung gelangenden Pigmente, Füllstoffe und Hilfsstoffe, wie Sikkative, Hautverhinderungsmittel, Antiabsetzmittel, Entschäumer etc. sind dem Fachmann bekannt oder der einschlägigen Literatur zu entnehmen.

Die Herstellung der Lacke erfolgt zweckmäßig in der Weise, daß man die Emulsion mit den Pigmenten und Additiven mischt und den Ansatz auf einem entsprechenden Mahlaggregat (Perlmühle, Dreiwalzenmühle, Rührwerkskugelmühle) dispergiert.

Neben dem Pinselauftrag ist für die erfindungsgemäßen Lacke und Farben auch die Applikation durch Tauchen, Spritzen oder Fluten möglich. Die Trocknung erfolgt bei Zimmertemperatur oder gegebenenfalls durch forcierte Lufttrocknung bei Temperaturen bis ca. 100°C.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten. Die angegebenen Grenzviskositätszahlen wurden in Chloroform oder Dimethylformamid (DMF) bei 20°C bestimmt und werden in ml/g angegeben.

(I) Herstellung der Fettsäure-Methacrylsäure-Copolymerisate

Copolymerisat C 1:

30 Tle Leinölfettsäure und 5 Tle Xylol werden auf 135 bis 140°C erwärmt. Bei dieser Temperatur wird innerhalb 6 bis 8 Stunden gleichzeitig eine Mischung aus 32 Tlen Isobutylmethacrylat, 6 Tlen Vinyltoluol und 21 Tlen Methacrylsäure sowie eine Mischung aus weiteren 11 Tlen der Leinölfettsäure, 3 Tlen tert.-Butylperbenzoat, 1 Tl Dibenzoylperoxid (50 %ig) und 5 Tlen Xylol gleichmäßig zugegeben. Nach Beendigung der Zugabe wird die Reaktionstemperatur beibehalten, bis eine Rückstandsbestimmung einen mindestens 95 %igen Polymerisationsumsatz ergibt. Bei einem zu langsamen Reaktionsfortgang wird der Ansatz mit 1 Tl tert.-Butylperbenzoat versetzt. Das Copolymerisat weist eine Säurezahl von 209 mg KOH/g und eine Grenzviskositätszahl (DMF) von 5,5 auf.

(II) Herstellung der Alkydharze

Gemäß der in der Tab. 1 angegebenen Zusammensetzung werden Alkydharze in folgender Weise hergestellt: In einem geeigneten Reaktionsgefäß werden die Komponenten des Teiles 1 bei 230°C so lange verestert, bis eine klare Schmelze entstanden ist. Nach einer weiteren Stunde wird Teil 2 zugesetzt und bei 200°C reagiert, bis die angegebenen Endwerte erreicht sind. Nach Abziehen des inerten Lösemittels (aus dem Copolymer) wird der Ansatz mit Ethylenglykolmonobutylether auf einen Festkörpergehalt von 87 % eingestellt und bei 50°C mit einer verdünnten wäßrigen Ammoniaklösung emulgiert. Die Ammoniak- und Wassermenge wird so gewählt, daß ein pH-Wert der Emulsion von 8,2 bis 8,4 und ein Festkörpergehalt von 40 % resultiert. Die Harzlösungen sind milchige bis transparente Flüssigkeiten mit ausgeprägter Strukturviskosität.

Beispiel 1 bis 4: Herstellung von wasserverdünnbaren weißen Streichlacken

Aus den Alkydharzemulsionen A 1, A 3, A 4 und A 6 werden in üblicher Weise durch Vermahlen auf einer Rührwerkskugelmühle (Typ DYNO-MILL) mit Titandioxid Lacke mit einem Pigment-Bindemittelverhältnis von ca. 1 : 1 in folgender Formulierung hergestellt

| | |
|---|---|
| 260 Tle | Harzemulsion, 40 % |
| 1,5 Tle | Ammoniaklösung 25 % |
| 100 Tle | $TiO_2$, Rutiltyp |
| 1 Tl | Kombinationstrockner, wasserverdünnbar (Co, Ba, Zr) |
| 2 Tle | Antihautmittel (Oximbasis) |
| 1 Tl | Entschäumer (silikonfrei) |
| 30 Tle | Wasser |

Der Lack hat einen Festkörpergehalt von ca. 50 % und wird gegebenenfalls nach Einstellen des pH-Wertes auf 8,8 bis 9,1 durch Streichen auf geschliffene Holztafeln aufgebracht. Die Prüfungen und Ergebnisse sind in Tabelle 2 zusammengefaßt.

Beispiel 5 bis 7: Herstellung von wasserverdünnbaren Grundierungen (weiß)

Aus den Alkydharzemulsionen A 1, A 2 und A 3 werden gemäß nachfolgender Formulierung wasserverdünnbare Grundierungen hergestellt.

| | |
|---|---|
| 220 Tle | Harzemulsion, 40 % |
| 70 Tle | $TiO_2$, Rutiltyp |
| 72 Tle | Calciumcarbonat |
| 116 Tle | Talkum |
| 1 Tl | Sikkativgemisch (wie Beisp. 1) |
| 1,5 Tle | Antihautmittel (wie Beisp. 1) |
| 1,5 Tle | Entschäumer, silikonfrei |
| 30 Tle | Wasser |

Der Lack hat einen Festkörpergehalt von 66 % und wird, gegebenenfalls nach Einstellen des pH-Wertes auf 8,5 bis 9,0, durch Streichen auf Holztafeln aufgebracht.

Die Prüfungen und Ergebnisse sind in Tabelle 2 zusammengefaßt.

Beispiel 8 bis 9 : Herstellung von wasserverdünnbaren Holzlasuren

Aus den Harzemulsionen A 2 und A 5 wurden wasserverdünnbare Holzlasuren nach folgender Formulierung hergestellt.

| | |
|---|---|
| 370 Tle | Harzemulsion, ca. 40 % |
| 4 Tle | Ammoniaklösung, 25 % |
| 4 Tle | Sikkativgemisch (wie Beisp. 1) |
| 0,5 Tle | Fungizidlöung |
| 32,5 Tle | Mattierungsmittel (auf Basis Polyethylenwachs/oberflächenbehandelte Kieselsäure) |
| 14,0 Tle | einer 1 : 1 Mischung aus Diethylenglykolmonoethylether und einem aliphatischen Kohlenwasserstoff-Lösemittel (Siedebereich 184 - 207 °C, Anilinpunkt 85 °C, ASTM D-1012) |
| 2,0 Tle | Antihautmittel (wie Beisp. 1) |
| 2 Tle | Antiabsetzmittel (Basis: mod. Rizinusöl) |
| 2 Tle | Entschäumer (wie Beisp. 1) |
| 4 Tle | Verlaufmittel (silikonhaltig) |
| 45 Tle | Wasser |

Die Holzlasur hat einen Festkörpergehalt von ca. 35 %, einen pH-Wert von 9,2 und eine Auslaufzeit nach DIN 53 211 / 20 °C von 30 bis 35 Sekunden. Die Lasur wird auf Fichtenholztafeln durch Streichen aufgebracht.

Die anwendungstechnischen Prüfungen und Ergebnisse sind in Tabelle 2 zusammengefaßt.

Zum Vergleich wurden folgende Produkte herangezogen:

Lack VA : Lack entsprechend Beispiel 1 mit einem Bindemittel entsprechend AT-PS 377 990

Lack VB : handelsübliche Dispersionsfarbe für Holz auf Basis einer feindispersen Copolymerisatdispersion auf Acrylsäureesterbasis mit mittlerer Viskosität

Lack VC : Malerlack auf Basis eines Bindemittels in organischen Lösungsmitteln (Handelsprodukt)

Lack VD : handelsübliche Holzlasur, wasserverdünnbar.

Die Prüfungen wurden in folgender Weise durchgeführt:

1. Streichbarkeit:

Die Verarbeitbarkeit der Materialien wurde subjektiv nach einem Punktesystem (Benotung 1 = sehr gut, 5 = sehr schlecht) beurteilt.

2. Anschlußzeit:

Eine Holztafel wurde halbseitig mit dem Prüflack gestrichen. Nach jeweils 5 Minuten wurde die Überstreichbarkeit der Randzone durch streifenweisen Auftrag des Lackes geprüft. Bei der angegebenen Zeit ist der "Anschluß" nicht mehr gegeben.

3. Trocknung:

Drying Recorder bei 20 °C und einer Schichtstärke von 150 μm Naßfilm auf Glasstreifen.

4. Überstreichbarkeit:

Nach der angegebenen Zeit ist eine einwandfreie Überlackierbarkeit gegeben. Die Prüfung erfolgt im 12-Stunden-Abstand.

5. Lagerstabilität des Lackes:

Alle Lacke waren, gegebenenfalls nach Einstellung des pH-Wertes, nach einer Lagerzeit von 4 Wochen bei 50°C einwandfrei verarbeitbar.

## Tabelle 1

| Alkydharz | A 1 | A 2 | A 3 | A 4 | A 5 | A 6 |
|---|---|---|---|---|---|---|
| Teil I | | | | | | |
| Safflorölfettsäure | 200 | 240 | 150 | -- | -- | -- |
| isomerisierte Linolsäure (1) | 110 | 70 | 230 | 200 | 105 | 40 |
| Tallölfettsäure | -- | -- | -- | 20 | 25 | 115 |
| Pentaerythrit | 115 | -- | 115 | 35 | 30 | 115 |
| Trimethylolpropan | -- | -- | -- | 80 | 85 | -- |
| Di-trimethylolpropan | -- | 212 | -- | -- | -- | -- |
| p-tert-Butylbenzoesäure | -- | -- | -- | -- | 65 | -- |
| Paraformaldehyd, 89 % | -- | -- | -- | -- | -- | 16 |
| Isophthalsäure | 100 | 100 | 80 | 100 | 100 | 100 |
| Teil 2 | | | | | | |
| Fettsäurecopolymer C 1 | 340 | 340 | 340 | 195 | 270 | 195 |
| | 865 | 962 | 915 | 630 | 680 | 581 |
| $-H_2O$ | -52 | -52 | -52 | -41 | -45 | 40 |
| | 813 | 910 | 863 | 589 | 635 | 541 |
| Kennwerte | | | | | | |
| Säurezahl mg KOH/g | 45 | 49 | 43 | 33 | 49 | 37 |
| Grenzviskositätszahl ($CHCl_3$) | 12,5 | 10,0 | 9,5 | 12,8 | 9,5 | 12,0 |
| Gew.-% C 1 (2) | 42 | 37 | 39 | 33 | 43 | 36 |

(1) ca. 50 % 9,11-Linolsäure

(2) ca.-Angaben

Tabelle 2

| | STREICHLACK | | | | GRUNDIERUNG | | | LASUR | | STREICHLACK | | | LASUR |
|---|---|---|---|---|---|---|---|---|---|---|---|---|---|
| Prüfung/Beispiel | 1 | 2 | 3 | 4 | 5 | 6 | 7 | 8 | 9 | V 1 | V 2 | V 3 | V 4 |
| Bindemittel | A1 | A3 | A4 | A6 | A1 | A2 | A3 | A2 | A5 | VA | VB | VC | VD |
| Streichbarkeit | 1 | 1 | 1-2 | 1-2 | 1 | 1 | 1 | 1 | 1-2 | 1 | 3-4 | 1 | 2 |
| Anschlußzeit (Minuten) | 30 | 20 | 25 | 30 | 25 | 25 | 25 | -- | -- | 10 | 2 | 60 | -- |
| Trocknung klebfrei (Min.) | 110 | 110 | 90 | 90 | 20 | 25 | 25 | 30 | 20 | 90 | 60 | 300 | 60 |
| griffest (Stden) | 2,5 | 3,0 | 2,5 | 2,5 | 1,0 | 1,0 | 1,0 | 1,5 | 1,0 | 3,0 | 1,5 | 7,0 | 1,5 |
| Überstreichbarkeit (nach Stden) | 12 | 9 | 9 | 12 | 6 | 6 | 6 | 12 | 6 | 6 | 12 | 18 | 6 |

## Patentansprüche

**1.** Verwendung von nach teilweiser oder vollständiger Neutralisation wasserlöslichen Alkydharzen, welche 33 bis 43 Gew.-% eines Fettsäure-Methacrylsäure-Copolymeren aus 30 bis 50 Gew.-% ungesättigten Fettsäuren, 10 bis 25 Gew.-% Methacrylsäure und 30 bis 55 Gew.-% anderer Vinyl- und/oder (Meth)-acrylmonomeren, einen zusätzlichen Anteil an ungesättigten Fettsäuren, 10 bis 25 Gew.-% an Polyalkoholen mit 2 bis 6 Hydroxylgruppen, 10 bis 20 Gew.-% an aromatischen und/oder aliphatischen Dicarbonsäuren, 0 bis 15 Gew.-% an cyclischen und/oder polycyclischen Monocarbonsäuren und 0 bis 5 Gew.-% eines Polyethylenglykols enthalten, mit der Maßgabe, daß der Gesamtgehalt an ungesättigten Fettsäuren im Alkydharz 30 bis 70 Gew.-%, vorzugsweise 40 bis 60 Gew.-%, beträgt, daß die freien, einer Säurezahl von 25 bis 70 mg KOH/g entsprechenden Carboxylgruppen zu mindestens 80 % von Methacrylsäureeinheiten stammen, daß die zusammen mit der Methacrylsäure eingesetzten Monomeren neben der C-C-Doppelbindung keine weiteren funktionellen Gruppen tragen und zu mindestens 80 Gew.-% aus solchen bestehen, welche benzinlösliche Homopolymere bilden, und daß die Alkydharze eine Grenzviskositätszahl zwischen 7 und 16 ml/g (CHCl$_3$, 20°C) aufweisen, wobei die Summen der Prozentanteile beim Pfropfcopolymerisat und beim Alkydharz jeweils 100 ergeben müssen, als Bindemittel zur Formulierung von wasserverdünnbaren Streichlacken, welche die üblichen Pigmente, Füllstoffe, Hilfslösemittel und andere Lackhilfsmittel enthalten.

## Claims

**1.** Use of alkyd resins which are water-soluble after partial or complete neutralisation and which contain from 33 to 43% by weight of a fatty acid/methacrylic acid copolymer comprising from 30 to 50% by weight of unsaturated fatty acids, from 10 to 25% by weight of methacrylic acid and from 30 to 55% by weight of other vinyl monomers and/or (meth)acrylic monomers, an additional content of unsaturated fatty acids, from 10 to 25% by weight of polyols containing from 2 to 6 hydroxyl groups, from 10 to 20% by weight of aromatic and/or aliphatic dicarboxylic acids, from 0 to 15% by weight of cyclic and/or polycyclic monocarboxylic acids and from 0 to 5% by weight of a polyethylene glycol, with the proviso that the total content of unsaturated fatty acids in the alkyd resin is from 30 to 70% by weight, preferably from 40 to 60% by weight, that at least 80% of the free carboxyl groups corresponding to an acid value of from 25 to 70 mg of KOH/g derive from methacrylic acid units, that the monomers employed together with the methacrylic acid carry no further functional groups apart from the C-C double bond and consist to the extent of at least 80% by weight of those monomers which form gasoline-soluble homopolymers, and that the alkyd resins have an intrinsic viscosity of between 7 and 16 ml/g ($CHCl_3$, 20°C), the sums of the percentages in the graft copolymer and in the alkyd resin in each case necessarily adding up to 100, as binders for the formulation of water-thinnable brushing paints which contain the conventional pigments, extenders, auxiliary solvents and other paint auxiliaries.

**Revendications**

1. Utilisation de résines alkydes solubles dans l'eau après neutralisation partielle ou totale, qui contiennent 33 à 43 % en poids d'un copolymère d'acides gras et d'acide méthacrylique formé de 30 à 50 % en poids d'acides gras insaturés, de 10 à 25 % en poids d'acide méthacrylique et de 30 à 55 % en poids d'autres monomères vinyliques et/ou (méth)acryliques, une fraction supplémentaire d'acides gras insaturés, 10 à 25 % en poids de polyalcools ayant 2 à 6 groupes hydroxyle, 10 à 20 % en poids d'acides dicarboxyliques aromatiques et/ou aliphatiques, 0 à 15 % en poids d'acides monocarboxyliques cycliques et/ou polycycliques et 0 à 5 % en poids d'un polyéthylèneglycol, sous réserve que la teneur totale en acides gras insaturés dans la résine alkyde soit de 30 à 70 % en poids, de préférence de 40 à 60 % en poids, que les groupes carboxyle libres, correspondant à un indice d'acide de 25 à 70 mg de KOH/g, proviennent à au moins 80 % d'unités d'acide méthacrylique, que les monomères introduits en même temps que l'acide méthacrylique ne portent pas d'autre groupe fonctionnel à côté de la double liaison C-C et soient constitués à au moins 80 % en poids de ceux qui forment des homopolymères solubles dans l'essence, et que les résines alkydes présentent un indice de viscosité intrinsèque compris entre 7 et 16 ml/g ($CHCl_3$, 20°C), les sommes des pourcentages dans le copolymère greffé et dans la résine alkyde devant à chaque fois être égales à 100, comme liants pour la formulation de peintures à la brosse diluables à l'eau qui contiennent les pigments, charges, solvants auxiliaires et autres additifs de peinture classiques.